# EUROPEAN PATENT APPLICATION

(11) **EP 4 436 275 A1**
(43) Date of publication of application: **25.09.2024**
(21) Application number: 21964316.0
(22) Date of filing: 16.11.2021
(51) Int. Cl.: H04W 64/00

(54) **POSITIONING METHOD AND APPARATUS, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2021/130986
(87) International publication number: WO 2023/087150

(57) **Abstract**

The present disclosure provides a positioning method and apparatus, and a storage medium. The method comprises: sending a capability request message to a second terminal, the second terminal being a terminal that communicates with a first terminal by means of a sidelink; in response to receiving a capability provision message returned by the second terminal, sending a positioning auxiliary information request message to the second terminal on the basis of positioning capability information for indicating the positioning capability supported by the second terminal in the capability provision message; in response to receiving a positioning auxiliary information provision message that is returned by the second terminal and that comprises first positioning auxiliary information, sending a request position information message to the second terminal; and in response to receiving a position information provision message that is returned by the second terminal and that comprises a measurement result, determining position information of the second terminal on the basis of the first positioning auxiliary information and the measurement result. In the present disclosure, an LPP protocol is enhanced, and the purpose of positioning a terminal on a sidelink on the basis of the LPP protocol is achieved.

## Description

### TECHNICAL FIELD

The disclosure relates to the field of communication technologies, and in particular, to a positioning method and apparatus, and a storage medium.

### BACKGROUND

LPP (LTE Positioning Protocol) is a peer-to-peer positioning protocol applied between positioning servers and devices. At present, it can be applied between positioning servers and terminals to position terminals.

### SUMMARY

In order to overcome problems in the related art, embodiments of the present disclosure provide a positioning method and apparatus, and a storage medium.

According to embodiments of a first aspect of the present disclosure, a positioning method is provided. The positioning method is performed by a first terminal, and includes:
sending a capability request message to a second terminal, wherein the second terminal is a terminal that communicates with the first terminal through a sidelink, and the capability request message is configured to request the second terminal to provide a positioning capability supported by the second terminal;
in response to receiving a capability provision message returned by the second terminal, sending a positioning assistance information request message to the second terminal based on capability information for indicating the positioning capability supported by the second terminal in the capability provision message, wherein the positioning assistance information request message is configured to request the second terminal to provide first positioning assistance information, and the first positioning assistance information is configured to assist the first terminal in determining position information of the second terminal;
in response to receiving a positioning assistance information provision message returned by the second terminal and comprising the first positioning assistance information, sending a position information request message to the second terminal, wherein the position information request message is configured to request the second terminal to provide a measurement result for measuring the positioning information of the second terminal;
in response to receiving a position information provision message returned by the second terminal and including the measurement result, determining the position information of the second terminal based on the first positioning assistance information and the measurement result.

According to embodiments of a second aspect of the present disclosure, a positioning method is provided. The method is performed by a second terminal, and includes:
in response to receiving a capability request message sent by a first terminal, sending a capability provision message to the first terminal, wherein the first terminal is a terminal that communicates with the second terminal through a sidelink, the capability request message is configured to request the second terminal to provide a positioning capability supported by the second terminal, and the capability provision message includes positioning capability information for indicating a positioning capability supported by the second terminal;
in response to receiving a positioning assistance information request message sent by the first terminal based on the positioning capability information, sending a positioning assistance information provision message including first positioning assistance information to the first terminal, wherein the positioning assistance information request message is configured to request the second terminal to provide the first positioning assistance information, the first positioning assistance information is configured to assist the first terminal in determining a measurement result for positioning the second terminal;
in response to receiving a position information request message sent by the first terminal, positioning the second terminal based on the positioning capability supported by the second terminal, determining the measurement result, wherein the position information request message is configured to request the second terminal to determine the measurement result;
sending a position information provision message including the measurement result to the first terminal.

According to embodiments of a third aspect of the present disclosure, a positioning apparatus is provided. The apparatus is applied to a first terminal, and includes:
a first sending module, configured to send a capability request message to a second terminal, wherein the second terminal is a terminal that communicates with the first terminal through a sidelink, and the capability request message is configured to request the second terminal to provide a positioning capability supported by the second terminal;
a second sending module, configured to, in response to receiving a capability provision message returned by the second terminal, send a positioning assistance information request message to the second terminal based on capability information for indicating the positioning capability supported by the second terminal in the capability provision message, wherein the positioning assistance information request message is configured to request the second terminal to provide first positioning assistance information, and the first positioning assistance information is configured to assist the first terminal in determining position information of the second terminal;
a third sending module, configured to, in response to receiving a positioning assistance information provision message returned by the second terminal and comprising the first positioning assistance information, send a position information request message to the second terminal, wherein the position information request message is configured to request the second terminal to provide a measurement result for measuring the positioning information of the second terminal; and
a determining module, configured to, in response to receiving a position information provision message returned by the second terminal and including the measurement result, determine the position information of the second terminal based on the first positioning assistance information and the measurement result.

According to embodiments of a fourth aspect of the present disclosure, a positioning apparatus is provided. The apparatus is applied to a second terminal, and includes:
a fourth sending module, configured to, in response to receiving a capability request message sent by a first terminal, send a capability provision message to the first terminal, wherein the first terminal is a terminal that communicates with the second terminal through a sidelink, the capability request message is configured to request the second terminal to provide a positioning capability supported by the second terminal, and the capability provision message includes positioning capability information for indicating a positioning capability supported by the second terminal;
a fifth sending module, configured to, in response to receiving a positioning assistance information request message sent by the first terminal based on the positioning capability information, send a positioning assistance information provision message including first positioning assistance information to the first terminal, wherein the positioning assistance information request message is configured to request the second terminal to provide the first positioning assistance information, the first positioning assistance information is configured to assist the first terminal in determining a measurement result for positioning the second terminal;
a positioning module, configured to, in response to receiving a position information request message sent by the first terminal, position the second terminal based on the positioning capability supported by the second terminal, and determine the measurement result, wherein the position information request message is configured to request the second terminal to determine the measurement result;
a sixth sending module, configured to send a position information provision message including the measurement result to the first terminal.

According to embodiments of a fifth aspect of the present disclosure, a computer readable storage medium is provided. The storage medium stores a computer program, and the computer program is configured to perform any of the positioning methods described above.

According to embodiments of a sixth aspect of the present disclosure, a positioning apparatus is provided, including:
a processor; and
a memory, configured to store instructions executable by the processor,
wherein the processor is configured to perform any of the positioning methods described above.

The technical solution provided in embodiments of the present disclosure may include the following beneficial effects.

In embodiments of the present disclosure, terminal positioning can be carried out between terminals based on the LPP protocol, which has been enhanced to achieve the purpose of positioning terminals based on the LPP protocol on the sidelink.

It should be understood that the general description above and the detailed description in the following text are only illustrative and explanatory, and cannot limit this disclosure.

### BRIEF DESCRIPTION OF THE DRAWINGS

The accompanying drawings are incorporated into the specification and form a part of this specification, illustrating embodiments in accordance with the present disclosure and used together with the specification to explain the principles of the present disclosure.
Fig. 1 is a schematic diagram of an application scenario of an LPP protocol in the related art.
Fig. 2 is a schematic flowchart of a positioning method illustrated according to an exemplary embodiment.
Fig. 3 is a schematic flowchart of another positioning method illustrated according to an exemplary embodiment.
Fig. 4 is a schematic flowchart of another positioning method illustrated according to an exemplary embodiment.
Fig. 5 is a schematic flowchart of another positioning method illustrated according to an exemplary embodiment.
Fig. 6 is a schematic flowchart of another positioning method illustrated according to an exemplary embodiment.
Fig. 7 is a schematic flowchart of another positioning method illustrated according to an exemplary embodiment.
Fig. 8 is a block diagram of a positioning apparatus illustrated according to an exemplary embodiment.
Fig. 9 is a block diagram of another positioning apparatus illustrated according to an exemplary embodiment.
Fig. 10 is a block diagram of a positioning apparatus illustrated according to an embodiment of the present disclosure.

### DETAILED DESCRIPTION

Here, a detailed explanation of exemplary embodiments will be provided, example of which are illustrated in the accompanying drawings. When the following description involves drawings, unless otherwise indicated, the same numbers in different drawings represent the same or similar elements. The embodiments described in the following exemplary embodiments do not represent all possible embodiments consistent with the present disclosure. On the contrary, they are only examples of apparatuses and methods consistent with some aspects of the present disclosure as detailed in the attached claims.

The terms used in this disclosure are for the sole purpose of describing specific embodiments and are not intended to limit this disclosure. The singular forms "a", "the" and "said" used in this disclosure and the accompanying claims are also intended to include the plural form, unless the context clearly indicates otherwise. It should also be understood that the term "and/or" used in this article refers to and includes any or all possible combinations of at least one associated listed item.

It should be understood that although various information may be described using terms such as first, second, third, etc. in this disclosure, such information should not be limited to these terms. These terms are only used to distinguish information of the same type from each other. For example, without departing from the scope of this disclosure, the first information can also be referred to as the second information, and similarly, the second information can also be referred to as the first information. Depending on the context, the word "if" used here can be interpreted as "when......" or "in case that......" or "in response to determining ......".

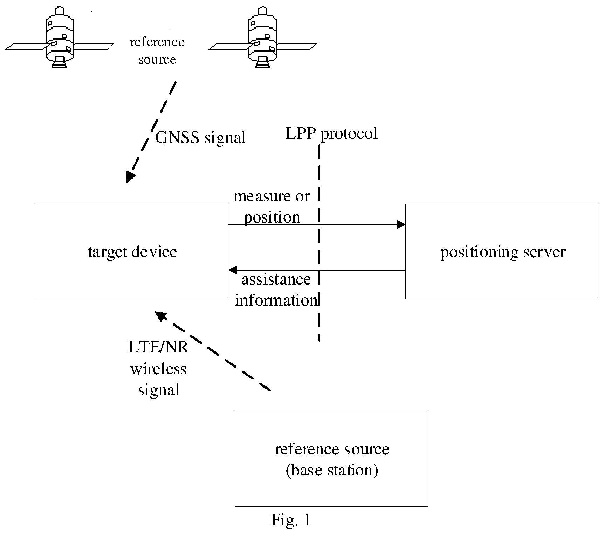

Referring to Fig. 1, communication can be carried out between the positioning server and the target device based on the LPP protocol to achieve the positioning of the target device. The positioning server can send a RequestCapabilities (capability request) message to the target device, and the target device can return a ProvideCapabilities (capability provision) message to the positioning server after receiving the RequestCapabilities message. The target device sends a RequestAssistanceData (positioning assistance information request) message to the positioning server, and the positioning server sends a ProvideAssistanceData (positioning assistance information provision) message to the target device after receiving the RequestAssistanceData message. Furthermore, the positioning server can send a RequestLocationInformation (position information request) message to the target device, and the target device returns a ProvideLocationInformation (position information provision) message to the positioning server after receiving the RequestLocationInformation message.

The positioning servers may include but are not limited to E-SMLC (Enhanced Serving Mobile Location Centre), LMF (Location Management Function), or SLP (SUPL Location Platform), and the target device may be a terminal.

It can be seen that the LPP protocol supports interaction between the location server and the terminal to locate the terminal. The LPP protocol is not suitable for scenarios where two terminals communicate on a sidelink. In order to solve this technical problem, this disclosure provides the following positioning method, which can perform terminal positioning between terminals based on the LPP protocol. The LPP protocol is enhanced to achieve the purpose of positioning based on the LPP protocol on the sidelink.

It should be noted that in this disclosure, positioning the terminal on the sidelink includes absolute positioning and relative positioning of the terminal. The absolute positioning can obtain the absolute position information of the terminal, including but not limited to the GNSS (Global Navigation Satellite System) coordinates of the terminal. Relative positioning can obtain the relative position information of the terminal relative to a reference point, which may be another terminal on the sidelink. The relative position information includes but is not limited to one or more combinations of relative coordinate position information, relative distance information, and relative angle information.

In embodiments of the present disclosure, the absolute positioning of Sidelink utilizes the absolute coordinates of the reference point and the relative position between the terminal and the reference point to obtain the absolute position information of the terminal. The relative position between the terminal and the reference point can be obtained based on the measurement of the positioning reference signal sent on sidelink. Sidelink relative positioning can be obtained by measuring the positioning reference signal sent on the sidelink between the terminal and the reference point.

In the following, the positioning method provided in this disclosure is introduced from the first terminal side first. The first terminal may be the terminal initiating the positioning in sidelink.

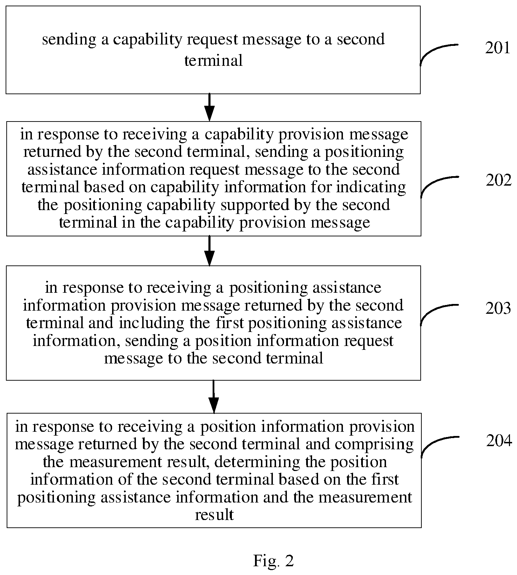

Embodiments of the present disclosure provide a positioning method, as shown in Fig. 2. Fig. 2 is a flowchart of a positioning method illustrated according to an embodiment, which can be performed by a first terminal. The method may include the following steps.

In step 201, a capability request message is sent to a second terminal.

In embodiments of the present disclosure, the second terminal is a terminal that communicates with the first terminal through a sidelink, and the capability request message is configured to request the second terminal to provide the positioning capability supported by the second terminal. The first terminal can act as the positioning server or target device in the LPP protocol to send the capability request message to the second terminal, where the second terminal can receive the capability request message as the target device or positioning server in the LPP protocol.

In step 202, in response to receiving a capability provision message returned by the second terminal, a positioning assistance information request message is sent to the second terminal based on positioning capability information for indicating a positioning capability supported by the second terminal in the capability provision message.

In embodiments of the present disclosure, after receiving the capability request message sent by the first terminal, the second terminal will return the capability provision message to the first terminal, which may include positioning capability information indicating the positioning capability supported by the second terminal. The first terminal can send the positioning assistance information request message to the second terminal based on the corresponding positioning capability information of the second terminal. The positioning assistance information request message is configured to request the second terminal to provide the first positioning assistance information to assist the first terminal in determining the position information of the second terminal.

In step 203, in response to receiving a positioning assistance information provision message including the first positioning assistance information returned by the second terminal, a position information request message is sent to the second terminal.

In this embodiment of the present disclosure, after receiving the positioning assistance information request message, the second terminal will return the positioning assistance information provision message to the first terminal. After receiving the positioning assistance information provision message, the first terminal can send the position information request message to the second terminal. The position information request message is configured to request the second terminal to provide the measurement result for measuring the position information of the second terminal.

In step 204, in response to receiving a position information provision message returned by the second terminal including the measurement result, position information of the second terminal is determined based on the first positioning assistance information and the measurement result.

In embodiments of the present disclosure, after receiving the position information request message, the second terminal will return the position information provision message to the first terminal. The first terminal can determine the position information of the second terminal based on the previously received first positioning assistance information and the measurement result included in the position information provision message. Specifically, the first terminal can determine the absolute position information of the second terminal, such as the absolute GNSS coordinate information of the second terminal. Alternatively, the first terminal can determine the relative position information of the second terminal, such as the relative coordinate, relative distance, relative angle, etc. of the second terminal relative to the reference point.

In the above embodiments, the first terminal can interact with the second terminal in the sidelink based on the LPP protocol to determine the position information of the second terminal. The LPP protocol has been enhanced to achieve the purpose of positioning terminals based on the LPP protocol on the sidelink.

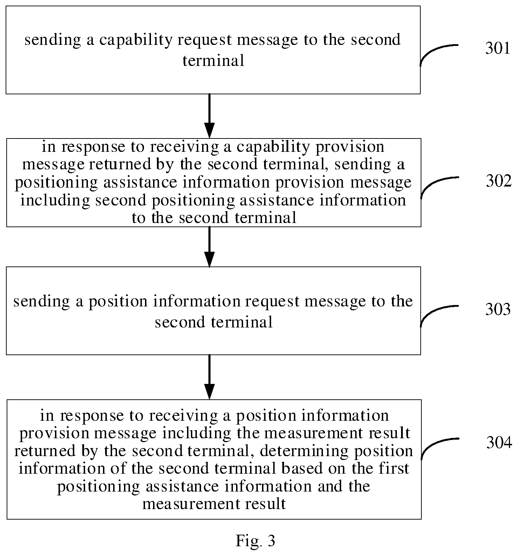

In some embodiments, referring to Fig. 3, which is a flowchart of a positioning method illustrated according to an embodiment, the method can be performed by a first terminal, and the method may include the following steps.

In step 301, a capability request message is sent to a second terminal.

In embodiments of the present disclosure, the second terminal is a terminal that communicates with the first terminal through a sidelink, and the capability request message is configured to request the second terminal to provide the positioning capability supported by the second terminal. The first terminal can act as the positioning server or target device in the LPP protocol to send the capability request message to the second terminal, where the second terminal can receive the capability request message as the target device or positioning server in the LPP protocol.

In step 302, in response to receiving a capability provision message returned by the second terminal, a positioning assistance information provision message including second positioning assistance information is sent to the second terminal.

In embodiments of the present disclosure, the first terminal as the initiator of positioning may, upon receiving the capability provision message returned by the second terminal, actively send the positioning assistance information provision message to the second terminal to assist the second terminal in determining its own location information. In one implementation, at least one of positioning reference signal information or position calculation assistance information can be provided to the second terminal.

In step 303, a position information request message is sent to the second terminal.

The position information request message is configured to request the second terminal to provide a measurement result for measuring position information of the second terminal.

In step 304, in response to receiving a position information provision message including the measurement result returned by the second terminal, position information of the second terminal is determined based on the first positioning assistance information and the measurement result.

In embodiments of the present disclosure, after receiving the position information request message, the second terminal will return the position information provision message to the first terminal. The first terminal can determine the position information of the second terminal based on the previously received first positioning assistance information and the measurement result included in the position information provision message. Specifically, the first terminal can determine the absolute location information of the second terminal, such as the absolute GNSS coordinate information of the second terminal. Alternatively, the first terminal can determine the relative position information of the second terminal, such as the relative coordinates, distance, angle, etc. of the second terminal relative to the reference point. This reference point may be the first terminal or other terminals, which is not limited in the disclosure.

In the above embodiment, the first terminal can interact with the second terminal in the sidelink based on the LPP protocol to determine the position information of the second terminal. The LPP protocol has been enhanced to achieve the purpose of positioning terminals based on the LPP protocol on the sidelink.

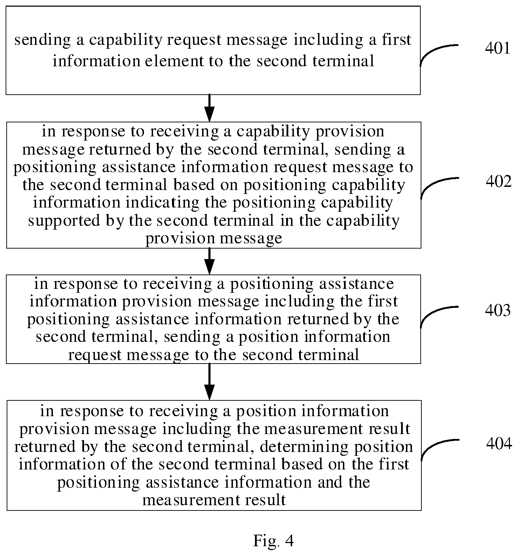

In some embodiments, referring to Fig. 4, which is a flowchart of a positioning method according to an embodiment, the method can be performed by a first terminal. The method may include the following steps.

In step 401, a capability request message including a first information element is sent to a second terminal.

In embodiments of the present disclosure, the second terminal is a terminal that communicates with the first terminal through a sidelink, and the capability request message is used to request the second terminal to provide the positioning capability supported by the second terminal. The first terminal can act as the target device in the LPP protocol to send a Request Capabilities (capability request) message to the second terminal, where the second terminal can receive the capability request message as the positioning server in the LPP protocol.

The first IE (Information Element) is the newly added information element in the capability request message. In one implementation, the number of first information elements is the same as the number of requested positioning capabilities supported by the second terminal. For example, if the first terminal requests the second terminal to provide 6 positioning capabilities, the number of first information elements is also 6. Different first information elements are used to request different positioning capabilities from the second terminal.

In another implementation, the number of first information elements is one, that is, the first terminal requests different positioning capabilities from the second terminal through information content included in the newly added first information element in the capability request message.

In step 402, in response to receiving a capability provision message returned by the second terminal, a positioning assistance information request message is sent to the second terminal based on positioning capability information for indicating the positioning capability supported by the second terminal in the capability provision message.

In embodiments of the present disclosure, after receiving the capability request message sent by the first terminal, the second terminal will return a ProvideCapabilities message to the first terminal, which may include positioning capability information indicating the positioning capability supported by the second terminal. The first terminal can send a RequestAssistanceData message to the second terminal based on the corresponding positioning capability information of the second terminal. The positioning assistance information request message is used to request the second terminal to provide the first positioning assistance information to assist the first terminal in determining the position information of the second terminal.

In step 403, in response to receiving a positioning assistance information provision message including the first positioning assistance information returned by the second terminal, a position information request message is sent to the second terminal.

In embodiments of the present disclosure, after receiving the positioning assistance information request message, the second terminal will return a ProvideAssistanceData message to the first terminal. After receiving it, the first terminal can send a RequestLocationInformation message to the second terminal. The position information request message is used to request the second terminal to provide a measurement result for measuring the position information of the second terminal.

In step 404, in response to receiving a position information provision message including the measurement result returned by the second terminal, the position information of the second terminal is determined based on the first positioning assistance information and the measurement result.

In embodiments of the present disclosure, after receiving the position information request message, the second terminal will return a ProvideLocationInformation message to the first terminal. The first terminal can determine the position information of the second terminal based on the previously received first positioning assistance information and the measurement result included in the position information provision message. Specifically, the first terminal can determine the absolute position information of the second terminal, such as the absolute GNSS coordinate information of the second terminal. Alternatively, the first terminal can determine the relative position information of the second terminal, such as the relative coordinates, distance, angle, etc. of the second terminal relative to the reference point.

In the above embodiment, the first terminal can interact with the second terminal in the sidelink based on the LPP protocol to determine the position information of the second terminal. The LPP protocol has been enhanced to achieve the purpose of positioning terminals based on the LPP protocol on the sidelink.

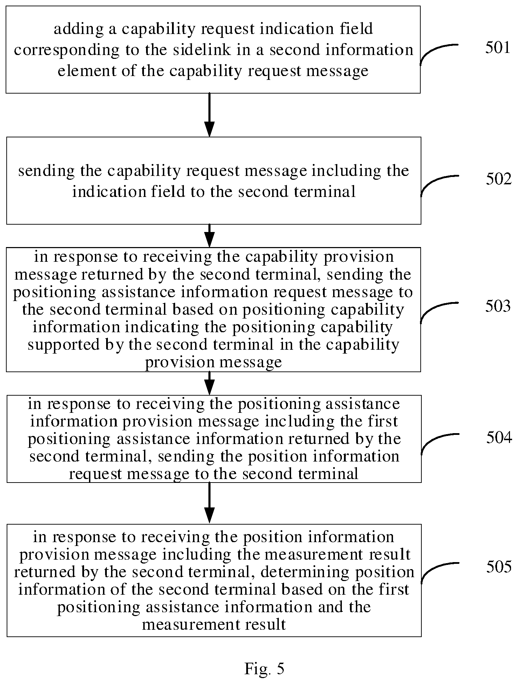

In some embodiments, referring to Fig. 5, which is a flowchart of a positioning method according to an embodiment, the method can be performed by a first terminal. The method may include the following steps.

In step 501, a capability request indication field corresponding to the sidelink is added in a second information element of a capability request message.

In embodiments of the present disclosure, the second terminal is a terminal that communicates with the first terminal through a sidelink, and the capability request message is used to request the second terminal to provide the positioning capability supported by the second terminal. The first terminal can act as the target device or positioning server in the LPP protocol to send a RequestCapabilities message to the second terminal, where the second terminal can receive the capability request message as the positioning server or target device in the LPP protocol.

The second information element is an information element in the capability request message used to request the device receiving the capability request message to provide supported positioning capabilities. The second information element may be an existing information element in the capability request message. The first terminal requests the second terminal to provide positioning capability corresponding to the sidelink by adding the capability request indication field in the second information element.

For example, the second information element is used in the capability request message to request the positioning server to provide the positioning capability of whether supporting determining the measurement result based on the time difference of downlink positioning signals reaching the terminal. If the capability request indication field is added to the second information element, the second terminal in the sidelink can be requested to provide the positioning capability of whether the second terminal supports determining the measurement result of the second terminal based on the time difference of multiple positioning signals reaching the second terminal.

In step 502, a capability request message including the indication field is sent to the second terminal.

In step 503, in response to receiving a capability provision message returned by the second terminal, a positioning assistance information request message is sent to the second terminal based on the positioning capability information for indicating the positioning capability supported by the second terminal in the capability provision message.

In embodiments of the present disclosure, after receiving the capability request message sent by the first terminal, the second terminal will return a ProvideCapabilities message to the first terminal, which may include positioning capability information indicating the positioning capability supported by the second terminal. The first terminal can send a RequestAssistanceData message to the second terminal based on the corresponding positioning capability information of the second terminal. The positioning assistance information request message is used to request the second terminal to provide the first positioning assistance information to assist the first terminal in determining the position information of the second terminal.

In step 504, in response to receiving a positioning assistance information provision message containing the first positioning assistance information returned by the second terminal, a position information request message is sent to the second terminal.

In embodiments of the present disclosure, after receiving a positioning assistance information request message, the second terminal will return a ProvideAssistanceData message to the first terminal. After receiving it, the first terminal can send a RequestLocationInformation message to the second terminal. The position information request message is used to request the second terminal to provide a measurement result for measuring the position information of the second terminal.

In step 505, in response to receiving a position information provision message including the measurement result returned by the second terminal, the position information of the second terminal is determined based on the first positioning assistance information and the measurement result.

In embodiments of the present disclosure, after receiving the position information request message, the second terminal will return a ProvideLocationInformation message to the first terminal. The first terminal can determine the position information of the second terminal based on the previously received first positioning assistance information and the measurement result included in the position information provision message. Specifically, the first terminal can determine the absolute position of the second terminal, such as the absolute GNSS coordinate information of the second terminal. Alternatively, the first terminal can determine the relative position of the second terminal, such as the relative coordinates, distance, angle, etc. of the second terminal relative to the reference point.

In the above embodiment, the first terminal can interact with the second terminal in the sidelink based on the LPP protocol to determine the position information of the second terminal. The LPP protocol has been enhanced to achieve the purpose of positioning terminals based on the LPP protocol on the sidelink.

In some embodiments, the positioning methods supported by the LPP protocol include at least one of the following:
DL-TDOA (DownLink-Time Difference Of Arrival) method, which can position the terminal by measuring differences of time at which positioning signals sent by multiple transmission units, such as TRP (Transmission Reception Point), reach the terminal.

UL-TDOA (UpLink-Time Difference Of Arrival) method, where the terminal can send the positioning signal to multiple measurement units, such as TRPs, and the terminal is positioned by calculating differences of time at which the positioning signal reaches the multiple measurement units.

Multi-Round Trip Time (RTT) method, where the terminal and measurement unit, such as TRP, respectively measures the time difference between the transmission and reception of the reference signal sent by the other party, and the RTT between the terminal and the measurement unit is calculated based on this time difference. After obtaining the RTTs of the terminal and multiple measurement units through this method, the terminal can be positioned.

UL-AOA (UpLink Angle Of Arrival) method, where the terminal sends a positioning signal to the measurement unit, and the measurement unit measures the angle of arrival of the positioning signal. The terminal can be positioned through the AOA between the terminal and multiple measurement units.

DL-AOD (DownLink Angle Of Department) method, where the measurement unit sends positioning signal beams to various directions, and the terminal measures and reports the signal quality of each beam, and the measurement unit determines the AOD based on the strength of the reported signal quality of each beam.

Carrier phase method, where the terminal measures the carrier phases of the positioning signals sent by multiple measurement units, and the terminal is positioned based on the phase difference.

In addition, the LPP protocol also supports A-GNSS (Assisted-GNSS), Blue Tooth (Bluetooth), TBS (Terrestrial Beacon System), WiFi (Wireless Fidelity), sensor positioning methods, etc.

It should be noted that in embodiments of the present disclosure, when applying the LPP protocol between terminals on the sidelink for positioning, in addition to supporting the existing positioning methods mentioned above, other positioning methods on the sidelink can also be supported.

In embodiments of the present disclosure, the capability request message can request the second terminal to provide additional positioning capabilities in addition to the aforementioned positioning capabilities, including but not limited to at least one of the following:
(1) a first positioning capability of whether the second terminal supports positioning the second terminal based on at least one round trip time (RTT) between at least one first terminal and the second terminal.
   The first positioning capability includes Sidelink RTT, Sidelink single sided RTT, Sidelink double sided RTT, and Sidelink multi-RTT.
   The main difference between RTT and multi-RTT is that RTT only measures the round-trip time between one first terminal and one second terminal, that is, it only measures the round-trip time between two terminals; multi-RTT measures the round-trip time between multiple first terminals and one second terminal. Subsequently, SL RTT is used to refer to RTT and Multi-RTT in this disclosure. In addition, in embodiments of this disclosure, RTT also includes Sidelink single sided RTT and Sidelink double sided RTT. Sidelink single sided RTT refers to measuring the round-trip time of the positioning signal based on the first or second terminal, while Sidelink double sided RTT refers to measuring the round-trip time of the positioning signal based on the first and second terminals, respectively.
(2) a second positioning capability of whether the second terminal supports positioning the second terminal based on at least one angle of arrival.
   The second positioning capability includes Sidelink AOA and UL-AOA. In embodiments of the disclosure, each terminal can refer to the signal it sends to other terminals as an uplink signal, and the signal it receives from other terminals as a downlink signal. Sidelink AOA can refer to the angle of arrival when a positioning signal sent by the second terminal to a first terminal reaches the first terminal, while UL-AOA can refer to the angles of arrival when positioning signals sent by the second terminal to multiple first terminals reaches the first terminals respectively. In embodiments of the disclosure, SL AOA will be used to refer to Sidelink AOA and UL-AOA in the following.
(3) a third positioning capability of whether the second terminal supports positioning the second terminal based on at least one transmission angle.
   The third positioning capability includes Sidelink AOD and DL-AOD, where Sidelink AOD refers to the transmission angle of positioning signals sent by a first terminal to the second terminal in different directions, and DL-AOD refers to the transmission angle of positioning signals sent by multiple first terminals to the second terminal in at least one direction. Subsequently, SL AOD will refer to Sidelink AOD and DL-AOD.
(4) a fourth positioning capability of whether the second terminal supports positioning the second terminal based on a carrier phase of a positioning signal sent by the first terminal.
   The fourth positioning capability includes Sidelink carrier phase and Sidelink multi-carrier phase, where carrier phase refers to measuring the carrier phase of one first terminal and one second terminal, and multi-carrier phase refers to measuring the carrier phase between multiple first terminals and one second terminal. Subsequently, the SL carrier phase is used to refer to the Sidelink carrier phase and the Sidelink multi-carrier phase, while the SL carrier phase is also used to refer to the uplink carrier phase and downlink carrier phase.
(5) a fifth positioning capability of whether the second terminal supports positioning the second terminal based on differences of time at which positioning signals sent by a plurality of first terminal reach the second terminal.
   The fifth positioning capability can be represented by SL DL-TDOA.
(6) a sixth positioning capability of whether the second terminal supports positioning the second terminal based on differences of time at which a positioning signal sent by the second terminal reaches a plurality of first terminals.
   The sixth positioning capability can be represented by SL UL-TDOA.
(7) a seventh positioning capability of whether the second terminal supports positioning the second terminal based on a target positioning method in a sidelink.

The target positioning method includes at least one of the following: auxiliary global navigation satellite system positioning method, Bluetooth positioning method, ground beacon system positioning method, wireless fidelity positioning method, or sensor positioning method.

The above is only an exemplary explanation. In the case where the first terminal that supports the LPP protocol sends the capability request message to the second terminal that supports the LPP protocol, the positioning capabilities supported by the second terminal requested by the capability request message should all fall within the scope of protection of this disclosure.

In the above embodiments, the second terminal can support at least one of the positioning capabilities mentioned above in the sidelink, achieving the purpose of obtaining the positioning capabilities supported by the other terminal through signaling between terminals on the sidelink, with high availability.

In some embodiments, the capability provision message returned by the second terminal may provide positioning capability information on whether the second terminal supports positioning using at least one of the following: A-GNSS, BT positioning, TBS positioning, WiFi positioning, sensor positioning, UL-TDOA, DL-TDOA, AOA, AOD, Multi-RTT.

In addition, in embodiments of the present disclosure, in the case where the capability request message is used to request the second terminal to provide the seventh positioning capability, the positioning capability information corresponding to the seventh positioning capability in the capability provision message returned by the second terminal can be used to indicate whether the second terminal supports the transmission of the first positioning assistance information determined by the target positioning method through the sidelink.

In one implementation, the positioning capability information includes sidelink A-GNSS information to indicate whether the second terminal supports A-GNSS assistance information transmission through the sidelink. The A-GNSS assistance information includes but is not limited to at least one of the following: ephemeris information, RTK (Real-time kinematic) information, etc.

In another implementation, the positioning capability information includes SL WiFi information to indicate whether the second terminal supports WiFi assistance information transmission through the sidelink. The WiFi assistance information includes but is not limited to AP ID (Access Point ID), AP location information, etc.

In another implementation, the positioning capability information includes SL TBS information to indicate whether the second terminal supports TBS assistance information transmission through the sidelink, where TBS assistance information includes but is not limited to MBS transmitter ID, MBS transmitter position information, etc.

In another implementation, the positioning capability information includes SL sensor information to indicate whether the second terminal supports the transmission of sensor assistance information through the sidelink. The sensor assistance information includes but is not limited to reference point position, air pressure, temperature, etc.

In some embodiments, the positioning capability information corresponding to SL RTT in the capability provision message includes at least one of the following: positioning signal capability information corresponding to SL RTT positioning capability; or positioning measurement capability information corresponding to the SL RTT positioning capability.

Specifically, the positioning signal capability information corresponding to the SL RTT positioning capability includes at least one of the following: first RTT capability information corresponding to the positioning reference signal sent by the second terminal; or second RTT capability information corresponding to the positioning reference signal received by the second terminal.

The first RTT capability information includes at least one of the following: first capability information of the second terminal in each sidelink frequency band; or second capability information of the second terminal on each sidelink carrier aggregation combination. Specifically, the first capability information may include a list of bandwidth supported by the second terminal on each sidelink frequency band, and the second capability information may include a maximum value of configurable positioning reference signal resources supported by the second terminal on each bandwidth part (BWP).

The second RTT capability information includes at least one of the following: sidelink frequency band information supported by the second terminal; or sidelink frequency band combination information supported by the second terminal. The sidelink frequency band information supported by the second terminal includes at least one of the following: a maximum number of reference signal resources supported by the second terminal on each resource set of each sidelink frequency band; or a list of bandwidth supported by the second terminal on each sidelink frequency band.

The positioning measurement capability information corresponding to the SL RTT positioning capability includes at least one of the following: a maximum number of received and transmitted time difference measurement quantities supported by the second terminal in each lateral link frequency range; or whether the second terminal supports measuring RSRP (Reference Signal Receiving Power) on each sidelink frequency band. At present, there are two sidelink frequency ranges, namely FR1 and FR2.

In some embodiments, the positioning capability information corresponding to SL AOA in the capability provision message includes at least one of the following: positioning signal capability information corresponding to SL AOA positioning capability; or positioning measurement capability information corresponding to the SL AOA positioning capability. In addition, the positioning capability information corresponding to SL AOA in the capability provision message also includes first antenna capability information corresponding to SL AOA positioning capability.

Specifically, the positioning signal capability information corresponding to the SL AOA positioning capability includes at least one of the following: sidelink frequency band information supported by the second terminal; or sidelink frequency band combination information supported by the second terminal. The sidelink frequency band information supported by the second terminal includes at least one of the following: a maximum number of reference signal resources supported by the second terminal on each resource set of each sidelink frequency band; or a list of bandwidth supported by the second terminal on each sidelink frequency band.

The positioning measurement capability information corresponding to the SL AOA positioning capability includes at least one of the following: a maximum number of arrival angle measurement quantities supported by the second terminal in each sidelink frequency range; or a first frequency band list used to indicate the arrival angle measurement quantity. The first frequency band list indicates, on each sidelink frequency band, whether the second terminal supports measurement of both the arrival angle and at least one first measurement quantity. In embodiments of the present disclosure, the first measurement quantity is a measurement quantity different from the arrival angle, including but not limited to SL DL-TDOA, SL Multi-RTT, SL RTT, SL carrier phase, etc.

The first antenna capability information is used to indicate a number of receiving antennas of the second terminal.

In some embodiments, the positioning capability information corresponding to SL AOD in the capability provision message includes at least one of the following: positioning signal capability information corresponding to SL AOD positioning capability; or positioning measurement capability information corresponding to the SL AOD positioning capability. In addition, the positioning capability information corresponding to SL AOD in the capability provision message also includes second antenna capability information corresponding to SL AOD positioning capability.

Specifically, the positioning signal capability information corresponding to the SL AOD positioning capability includes at least one of the following: sidelink frequency band information supported by the second terminal; or sidelink frequency band combination information supported by the second terminal. The sidelink frequency band information supported by the second terminal includes at least one of the following: a maximum number of reference signal resources supported by the second terminal on each resource set of each sidelink frequency band; or a list of bandwidth supported by the second terminal on each sidelink frequency band.

The positioning measurement capability information corresponding to the SL AOD positioning capability includes but is not limited to at least one of the following: a maximum number of RSRP measurement quantities of the positioning signal supported by the second terminal in each sidelink frequency range; a second frequency band list used to indicate the transmission angle measurement capability, where the second frequency band list indicates, on each sidelink frequency band, whether the second terminal supports measurement of both the transmission angle and at least one second measurement quantity; whether the second terminal supports RSRP measurement in at least one sidelink frequency range.

In embodiments of the present disclosure, the frequency range of the sidelink includes FR1 and FR2. The second measurement quantity is a measurement quantity different from the transmission angle, including but not limited to at least one of the following: SL DL-TDOA, SL Multi-RTT, SL RTT, SL carrier phase, etc. Whether the second terminal supports RSRP measurement on at least one sidelink frequency range may be whether the second terminal supports RSRP measurement on FR2.

The second antenna capability information is used to indicate a number of transmitting antennas of the second terminal.

In some embodiments, the positioning capability information corresponding to SL DL-TDOA in the capability provision message includes at least one of the following: positioning signal capability information corresponding to SL DL-TDOA positioning capability; or positioning measurement capability information corresponding to SL DL-TDOA positioning capability.

Specifically, the positioning signal capability information corresponding to the SL DL-TDOA positioning capability includes at least one of the following: sidelink frequency band information supported by the second terminal; or sidelink frequency bands combination information supported by the second terminal. The sidelink frequency band information supported by the second terminal includes at least one of the following: a maximum number of reference signal resources supported by the second terminal on each resource set of each sidelink frequency band; or a list of bandwidth supported by the second terminal on each sidelink frequency band.

The positioning measurement capability information corresponding to the SL DL-TDOA positioning capability includes at least one of the following: a maximum number of reference signal time difference RTSD measurement quantities supported by the second terminal in each sidelink frequency range; or whether the second terminal support measuring RSRP in each sidelink frequency range. The frequency range of the sidelink can include FR1 and FR2.

In some embodiments, the positioning capability information corresponding to SL UL-TDOA in the capability provision message includes at least one of the following: positioning signal capability information corresponding to SL UL-TDOA positioning capability; or positioning measurement capability information corresponding to SL UL-TDOA positioning capability.

The positioning signal capability information corresponding to the SL UL-TDOA positioning capability includes at least one of the following: third capability information of the sidelink frequency band supported by the second terminal; or fourth capability information on the sidelink carrier aggregation combination supported by the second terminal. The third capability information includes: a list of bandwidth supported by the second terminal on each sidelink frequency band. The fourth capability information includes a maximum number of configurable positioning reference signal resources supported by the second terminal on each BWP (Bandwidth Part).

In some embodiments, the positioning capability information corresponding to the SL carrier phase in the capability provision message includes at least one of the following: the positioning signal capability information corresponding to the SL carrier phase positioning capability; or positioning measurement capability information corresponding to the SL carrier phase positioning capability.

Specifically, the positioning signal capability information corresponding to the SL carrier phase positioning capability may include at least one of the following: the sidelink frequency band information supported by the second terminal; or the sidelink frequency bands combination information supported by the second terminal. The sidelink frequency band information supported by the second terminal includes at least one of the following: a maximum number of reference signal resources supported by the second terminal on each resource set of each sidelink frequency band; or a list of bandwidth supported by the second terminal on each sidelink frequency band.

The positioning measurement capability information corresponding to the SL carrier phase positioning capability may include at least one of the following: a maximum number of carrier phase measurement quantities supported by the second terminal in each sidelink frequency range; or a third frequency band list used to indicate carrier phase measurement capability, where the third frequency band list indicates, on each sidelink frequency band, whether the second terminal supports simultaneous measurement of carrier phase and at least one third measurement quantity. The third measurement quantity here is a measurement quantity different from the carrier phase, including but not limited to at least one of the following: SL DL-TDOA, SL Multi-RTT, SL RTT, SL AOD, SL AOA.

In the above embodiments, the capability provision message may include various newly added positioning capability information, achieving the purpose of exchanging positioning capability information between terminals on the side link and high availability.

In some embodiments, the first terminal acting as the initiator of positioning may send a positioning assistance information request message to the second terminal based on the positioning capability information in the capability provision message returned by the second terminal.

In the case where the capability request message is used to request the second terminal to provide the seventh positioning capability, the information content included in the positioning assistance information request message sent by the first terminal can be the same as that in the related art.

For example, when the capability request message is used to request the second terminal to provide A-GNSS positioning capability, the information content included in the positioning assistance information request message for requesting SL A-GNSS assistance information is the same as GNSS-CommonAssistDataReq (GNSS Common Assistance Information Request), GNSS-GenericAssistDataReq (GNSS General Assistance Information Request), and GNSS-PeriodicAssistDataReq (GNSS Periodic Assistance Information Request) in relevant standards, and will not be repeated here.

When the capability request message is used to request the second terminal to provide WiFi positioning capability, the information content included in the positioning assistance information request message for requesting SL WiFi assistance information is the same as requestedAD (request address), visibleAPs (available access points), and wlan AP StoredData (wireless local area network access point storage data) in relevant standards, and will not be repeated here.

In the case where the capability request message is used to request the second terminal to provide TBS positioning capability, the information content included in the positioning assistance information request message for requesting SL TBS assistance information is the same as mbs-AlmanacAssistanceDataReq (mobile station ephemeris assistance information request) and mbs-AcquisitionAssistanceDataReq (mobile station acquisition assistance information request) in relevant standards, and will not be repeated here.

When the capability request message is used to request the second terminal to provide at least one of the first to sixth positioning capabilities, the positioning assistance information request message sent by the first terminal is at least used to request the second terminal to provide the information type of the first positioning assistance information.

The information type of the first positioning assistance information includes any of the following: positioning signal assistance information, position calculation assistance information, sidelink synchronization signal block configuration information, and error assistance information.

When the capability request message is used to request the second terminal to provide the first positioning capability, the positioning assistance information request message sent by the first terminal is at least used to request the second terminal to provide the information type of the first positioning assistance information. The information type of the first positioning assistance information may include downlink positioning signal assistance information, uplink positioning signal assistance information, position calculation assistance information, sidelink synchronization signal block configuration information, and error assistance information. When the capability request message is used to request the second terminal to provide the second positioning capability, third positioning capability, fourth positioning capability, or fifth positioning capability, the information type of the first positioning assistance information includes any of the following: positioning signal assistance information, position calculation assistance information, sidelink synchronization signal block configuration information, and error assistance information.

In the above embodiment, the first terminal can act as a positioning initiator to send a positioning assistance information request message to the second terminal. The positioning assistance information request message can at least request the second terminal to provide the information type of the first positioning assistance information, in order to assist the first terminal in determining the position information of the second terminal, achieving the purpose of positioning the terminal based on the interaction between terminals on the sidelink. In some embodiments, the second terminal as the positioning server or target device can send a positioning assistance information provision message to the first terminal, which includes the first positioning assistance information requested by the first terminal.

Specifically, for SL A-GNSS, SL wifi, SL TBS, Slsensor, etc., the assistance information content of A-GNSS, wifi, TBS, and sensor may be the same as that in ProvideAssistanceData in the relevant standard TS37.355, and will not be repeated here.

The first positioning assistance information corresponding to SL RTT positioning capability includes at least one of the following: positioning signal assistance information corresponding to SL RTT; position calculation assistance information corresponding to SL RTT; sidelink synchronization signal block configuration information corresponding to SL RTT; or error type assistance information corresponding to SL RTT.

Specifically, the second terminal can use any of the following methods when providing positioning signal assistance information corresponding to SL RTT.

The first method is to provide the positioning signal assistance information based on each sidelink frequency range.

Correspondingly, the positioning signal assistance information included in the positioning assistance information provision message is the first positioning signal assistance information used to indicate that the second terminal provides positioning signals based on each sidelink frequency range.

The first positioning signal assistance information may include at least one of the following: positioning signal identification; ARFCN (Absolute Radio Frequency Channel Number) value corresponding to the reference point of the positioning signal; starting PRB (Physical Resource Block) position information of the positioning signal relative to the reference point; subcarrier spacing information of the positioning signal; positioning signal bandwidth information; comb factor information of the positioning signal; or cyclic prefix information of the positioning signal.

The reference point of the positioning signal refers to the point A of the positioning signal, and point A is the reference point defined in NR (New Radio). The comb factor refers to the comb size, which can be set to a preset value according to the protocol.

The second method is to provide the positioning signal assistance information based on each BWP in each sidelink frequency range.

Correspondingly, the positioning signal assistance information included in the positioning assistance information provision message is the second positioning signal assistance information used to indicate that the second terminal provides positioning signals based on each BWP in each sidelink frequency range.

The second positioning signal assistance information includes at least one of the following: sidelink BWP configuration information; sidelink BWP resource pool configuration information.

The sidelink BWP configuration information includes at least one of the following: at least one of the position and bandwidth of the sidelink BWP, the subcarrier spacing, and the cyclic prefix; the length symbol information of the sidelink BWP; the starting symbol information of the sidelink BWP; the physical broadcast channel (PBSCH) configuration information of the sidelink BWP; or DC component parameter information of the sidelink BWP.

The sidelink BWP resource pool configuration information may include SL BWP receiving resource pool configuration information and SL BWP sending resource pool configuration information.

The information content of SL BWP sending resource pool configuration information is basically similar to that of SL BWP receiving resource pool configuration information. In embodiments of the disclosure, SL BWP receiving resource pool configuration information is used as an example for illustration.

In one implementation, SL BWP receiving resource pool configuration information can be reused in the sidelink resource pool information element.

In another implementation, SL BWP receiving resource pool configuration information can be used to configure a designated resource pool for positioning reference signals, that is, to configure a newly defined reference signal dedicated resource pool.

The SL BWP receiving resource pool configuration information is used to configure at least one of the positioning reference signal specified resource pool: starting resource block location information; number of resource blocks; comb factor size; subchannel size and subchannel data; sidelink time-domain resource information; measure power control information; regional configuration information; sidelink preemption enabling information; or optional configuration information for sidelink terminals.

The sidelink time-domain resource information can be configured using a bitmap (bit map) method. The optional configuration information for the side link terminal includes but is not limited to at least one of the following: sensing window, selection Window List, ResourceReservePeriodList, etc.

The position calculation assistance information corresponding to SL RTT may include but is not limited to at least one of the following: the position coordinates of the second terminal; the reference time information of the second terminal; where the reference time information includes at least one of the following: reference signal identification, ARFCN value, system frame number, and world time; or antenna information of the second terminal, where the antenna information includes at least one of a number of antennas and an antenna shape.

The antenna shape is used to indicate the antenna composition shape. The antenna composition shape is a straight line shape, and the corresponding correlation information includes the antenna spacing length. The antenna composition shape is circular, and the corresponding correlation information includes the circular radius information. The antenna composition shape is rectangular, and the corresponding correlation information includes the rectangular length and width information. The antenna composition shape is square, and the corresponding correlation information includes the square side length information.

The SL SSB (Synchronization Signal and PBCH block) configuration information corresponding to SL RTT is used to configure at least one of the following: sidelink synchronization signal identifier SL-SSID; ARFCN value; Sidelink synchronization signal block power; subcarrier spacing of the sidelink synchronization signal block; or Half frame index; used to indicate the offset of the first synchronization signal within the sidelink synchronization signal block period relative to the starting position of the synchronization signal block period; used to indicate the time interval between adjacent synchronization signal blocks within the synchronization signal block cycle.

The ARFCN value is the frequency value.

In embodiments of the present disclosure, there is no need to configure the cycle information of SSB, as SSB supports a fixed cycle of 160 milliseconds. Additionally, there is no need to configure the system frame number offset for SL SSB, as this parameter does not exist in the sidelink.

The error type assistance information corresponding to SL RTT includes any of the following: assistance information not supported; assistance information supported but not available; no positioning signal configured or positioning signal unavailable; other undefined error information. The no positioning signal configured can refer to the absence of configuration of positioning signal resources, etc.

The first positioning assistance information corresponding to the SL AOA positioning capability includes at least one of the following: positioning signal assistance information corresponding to the SL AOA; position calculation assistance information corresponding to SL AOA; sidelink synchronization signal block configuration information corresponding to SL AOA; or error type assistance information corresponding to SL AOA. The specific information content of the first positioning assistance information corresponding to the SL AOA positioning capability is similar to the specific information content of the first positioning assistance information corresponding to the SL RTT positioning capability, and will not be repeated here.

The first positioning assistance information corresponding to the SL AOD positioning capability includes at least one of the following: positioning signal assistance information corresponding to the SL AOD; position calculation assistance information corresponding to SL AOD; sidelink synchronization signal block configuration information corresponding to SL AOD; or error type assistance information corresponding to SL AOD. The specific information content of the first positioning assistance information corresponding to the SL AOD positioning capability is similar to the specific information content of the first positioning assistance information corresponding to the SL RTT positioning capability, and will not be repeated here.

The first positioning assistance information corresponding to the SL DL-TDOA positioning capability includes at least one of the following: positioning signal assistance information corresponding to the SL DL-TDOA; position calculation assistance information corresponding to SL DL-TDOA; sidelink synchronization signal block configuration information corresponding to SL DL-TDOA; or error type assistance information corresponding to SL DL-TDOA. The specific information content of the first positioning assistance information corresponding to the SL DL-TDOA positioning capability is similar to the specific information content of the first positioning assistance information corresponding to the SL RTT positioning capability, and will not be repeated here.

The first positioning assistance information corresponding to the SL UL-TDOA positioning capability includes at least one of the following: positioning signal assistance information corresponding to the SL UL-TDOA; position calculation assistance information corresponding to SL UL-TDOA; sidelink synchronization signal block configuration information corresponding to SL UL-TDOA; or error type assistance information corresponding to SL UL-TDOA. The specific information content of the first positioning assistance information corresponding to the SL UL-TDOA positioning capability is similar to the specific information content of the first positioning assistance information corresponding to the SL RTT positioning capability, and will not be repeated here.

The first positioning assistance information corresponding to the SL carrier phase positioning capability includes at least one of the following: positioning signal assistance information corresponding to the SL carrier phase; position calculation assistance information corresponding to SL carrier phase; sidelink synchronization signal block configuration information corresponding to SL carrier phase; or error type assistance information corresponding to SL carrier phase. The specific information content of the first positioning assistance information corresponding to the SL carrier phase positioning capability is similar to the specific information content of the first positioning assistance information corresponding to the SL RTT positioning capability, and will not be repeated here.

In the above embodiments, the second terminal can return the positioning assistance information provision message to the first terminal, assisting the first terminal in determining the position information of the second terminal, achieving the purpose of positioning the terminal based on the LPP protocol on the sidelink.

In some embodiments, the first terminal may actively send the positioning assistance information provision message including the second positioning assistance information to the second terminal, assisting the second terminal in determining its own position information. The information content of the second positioning assistance information is similar to that of the first positioning assistance information, and will not be repeated here.

In some embodiments, the first terminal as the target device initiating positioning, sends a position information request message to the second terminal.

The position information request message may include but is not limited to at least one of the following: a first common information element corresponding to any positioning capability; a first designated information element for requesting measurement results of the position information of the second terminal based on different positioning capabilities. Specifically, the first common information element includes at least one of the following: position information type; reporting trigger conditions for triggering reporting the measurement results; periodic reporting conditions for reporting the measuring results periodically; environmental information used to indicate the sidelink environment between the second terminal and the first terminal; service quality information.

The position information type includes but is not limited to at least one of the following: locationEstimateRequired, locationMeasurementsRequired, locationEstimatePreferred, and locationMeasurementsPreferred.

The reporting trigger conditions for triggering the reporting of measurement results may include but are not limited to at least one of the following: SL distance and/or RTT change exceeding the corresponding first threshold; the change in SL relative position (which can distinguish between the horizontal and/or vertical relative positions between the first and second terminals) exceeding the corresponding second threshold; the change in SL angle (which can distinguish between horizontal and/or vertical angles) exceeding the corresponding third threshold; the speed change of the second terminal on the sidelink (which can distinguish between horizontal speed and/or vertical speed) exceeding the corresponding fourth threshold; or the change in RSRP of SL positioning signal exceeding the corresponding fifth threshold.

The periodic reporting conditions may include but are not limited to at least one of the following: the number of reports and the reporting interval.

The environmental information can indicate any of the following: BadArea (bad environment area), NotBadArea (good environment area), MixedArea (mixed area).

The service quality information may include but is not limited to at least one of the following: horizontal accuracy; whether vertical coordinates are required; vertical coordinate accuracy; ResponseTime; VelocityRequest (request speed); the distance accuracy information used to indicate the accuracy of the distance between the second terminal and the first terminal; the horizontal angle accuracy information used to indicate the accuracy of the horizontal angle between the second terminal and the first terminal; indication information used to indicate whether a vertical angle is required; vertical angle accuracy information used to indicate the accuracy of the vertical angle between the second terminal and the first terminal.

The information content of the first designated information element used to request measurement results corresponding to SL A-GNSS, SL wifi, SL TBS, and SL sensor positioning capabilities is the same as the information content of the information element used to request measurement results corresponding to A-GNSS, wifi, TBS, and sensor positioning capabilities in related technologies, and will not be repeated here.

The first designated information element used to request measurement results corresponding to the SL RTT positioning capability can be used to request at least one of the following: SL Rx-Tx time difference measurement (sidelink transmission and reception time difference measurement); positioning signal RSRP; availability of assistance information; a maximum number of measurement quantities for the sidelink transmission and reception time difference; or a time granularity factor for reporting the transmission and reception time difference.

The availability of assistance information is used to indicate whether additional positioning signal assistance information can be requested. The additional positioning signal assistance information here refers to other positioning signal assistance information besides the positioning signal assistance information already requested by the terminal. The timingReportingGranularityFactor for reporting the transmission and reception time difference can indicate the interval between reports.

The first designated information element for requesting measurement results corresponding to SL AOA positioning capability can be used to request the availability of assistance information, which indicates whether additional positioning signal assistance information can be requested. The additional positioning signal assistance information here refers to other positioning signal assistance information besides the positioning signal assistance information already requested by the terminal.

The first designated information element for requesting measurement results corresponding to SL AOD positioning capability can be used to request at least one of the following: availability of assistance information; or a maximum number of RSRP measurements for positioning signal. The availability of assistance information is used to indicate whether additional positioning signal assistance information can be requested.

The first designated information element used to request measurement results corresponding to SL DL-TDOA positioning capability may not need to support sending the measurement results to the opposite end for position calculation. In addition, the first designated information element of the measurement result corresponding to the SL DL-TDOA positioning capability can be used to request the availability of assistance information. The availability of assistance information is used to indicate whether additional positioning signal assistance information can be requested.

The information content requested by the first designated information element for requesting measurement results corresponding to SL UL-TDOA positioning capability is the same as the information content requested by the first designated information element for requesting measurement results corresponding to SL RTT positioning capability, and will not be repeated here.

The first designated information element for requesting measurement results corresponding to the SL carrier phase positioning capability is used to request at least one of the following: sidelink carrier phase measurement quantity; positioning signal RSRP; availability of assistance information; a maximum number of sidelink carrier phase measurement quantities; or a time granularity factor for reporting the sidelink carrier phase measurement quantity. The positioning signal RSRP is the measurement quantity which the second terminal is requested to measure.

In the above embodiments, the first terminal can send the position information request message to the second terminal, requesting the second terminal to determine its own position information, achieving the purpose of positioning the terminal based on the LPP protocol on the sidelink.

In some embodiments, the second terminal, as the positioning server, can send the position information provision message to the first terminal, which is received by the first terminal through a sidelink.

The position information provision message includes at least one of the following: a second common information element corresponding to any positioning capability; or a second designated information element used to provide measurement results for measuring the position information of the second terminal based on different positioning capabilities. Specifically, the second common information element may include, but is not limited to, at least one of the following: position coordinate information for indicating position coordinates obtained from the position estimation of the second terminal; speed information for indicating speed obtained from speed estimation of the second terminal; position error information used to indicate the reason for positioning failure; position source information used to indicate the corresponding positioning capability used in determining the measurement result.

The positional coordinates may be geographical coordinates. Speed estimation can include but is not limited to the horizontal speed, vertical speed, uncertainty, etc. of the first terminal. Position error information can be used to indicate the cause of positioning failure. The position source information includes but is not limited to at least one of the following: A-GNSS, WLAN, BT, TBS, sensor, DL-TDOA, DL-AOD, motion-sensor. Based on this, SL carrier phase, SL RTT, SL UL-AOA, SL multi-RTT, SL UL-TDOA, etc. will be added.

The information content of the second designated information element used to provide measurement results corresponding to SL A-GNSS, SL wifi, SL TBS, and SL sensor positioning capabilities is the same as the information content of the information element used to provide measurement results corresponding to A-GNSS, wifi, TBS, and sensor positioning capabilities in related technologies, and will not be repeated here.

In embodiments of the present disclosure, the second designated information element for providing measurement results corresponding to the SL RTT positioning capability includes at least one of positioning measurement information or positioning measurement error information.

The SL RTT positioning measurement information includes at least one of the following: sidelink positioning signal identification information; sidelink synchronization signal identification information; layer 2 identification information of the second terminal; ARFCN value; timestamp; other additional measurement quantities corresponding to SL RTT positioning capability; positioning signal RSRP result; sidelink timing quality; or a path list used to indicate at least one of the measurement values or timing quality of other additional paths. Layer 2 generally refers to the data link layer.

The SL RTT positioning measurement error information is used to indicate at least one of the following: server error; undefined error; absence of assistance information; unable to measure; missing assistance information for position calculation; missing, altered or ineffective positioning signal configuration; or unable to send positioning signal.

The sidelink positioning signal identification information includes at least one of the following: identification information of the sidelink positioning signal resource set; identification of sidelink positioning signal resources; or identification of sidelink positioning signal. Other additional measurement quantities corresponding to the SL RTT positioning capability include the time difference between reception and transmission. The sidelink timing quality may include uncertainty or resolution.

In embodiments of the present disclosure, the second designated information element for providing measurement results corresponding to SL AOA positioning capability may not be set.

In embodiments of the present disclosure, the second designated information element for providing measurement results corresponding to SL AOD positioning capability includes at least one of SL AOD positioning measurement information or SL AOD positioning measurement error information. The second designated information element may also include AOD position information, and further, may include a valid SL timestamp or UTC (Universal Time Coordinated) corresponding to the AOD position information.

Specifically, the SL AOD positioning measurement information includes at least one of the following: sidelink positioning signal identification information; sidelink synchronization signal identification information; layer 2 identification information of the second terminal; ARFCN value; timestamp; RSRP result of positioning signal; or other additional measurement quantities.

The sidelink positioning signal identification information includes at least one of the following: identification information of the sidelink positioning signal resource set; identification of sidelink positioning signal resources; or identification of sidelink positioning signal. Other additional measurement quantities include but are not limited to at least one of the following: positioning signal resources and resource set identification, timestamp, the difference between the RSRP measurement value of the additional positioning signal and the RSRP measurement value of the positioning signal, or identification of the receiving beam of the positioning signal.

SL AOD positioning measurement error information is used to indicate at least one of the following: server error; Undefined error; Absence of assistance information; unable to measure; missing assistance information for position calculation; missing, altered or ineffective positioning signal configuration; or unable to send positioning signal.

In embodiments of the present disclosure, an information element for providing measurement results corresponding to the SL DL-TDOA positioning capability may not be set. If it is necessary to send the measurement results corresponding to the SL DL-TDOA positioning capability to the LMF (Location Management Function) device, the information content of this information element is the same as that of the second designated information element used to provide measurement results corresponding to the SL AOD positioning capability, and will not be repeated here.

In embodiments of the present disclosure, the second designated information element for providing measurement results corresponding to the SL UL-TDOA positioning capability includes at least one of SL UL-TDOA positioning signal measurement information or SL UL-TDOA positioning signal measurement error information.

The SL UL-TDOA positioning signal measurement information includes at least one of the following: sidelink reference positioning signal identification information. The sidelink reference positioning signal identification information includes at least one of the following: identification information of the sidelink reference positioning signal resource set; identification of sidelink reference positioning signal resource; or sidelink reference positioning signal identification.

SL UL-TDOA positioning measurement error information is used to indicate at least one of the following: server error; Undefined error; Absence of assistance information; unable to measure; missing assistance information for position calculation; missing, altered or ineffective positioning signal configuration; or unable to send positioning signal.

In addition, the second designated information element for providing measurement results corresponding to SL UL-TDOA positioning capability may also include measurement results corresponding to SL UL-TDOA positioning capability, which may include but are not limited to at least one of the following: sidelink positioning signal identification information; sidelink synchronization signal identification information; Layer 2 identification information of the second terminal; ARFCN value; timestamp; RTOA measurement value; RSRP result of positioning signal; timing quality of sidelink; or a path list used to indicate at least one of the measurement values or timing quality for other additional paths.

The sidelink positioning signal identification information includes but is not limited to at least one of the positioning signal resource set identification, positioning signal resource identification, or positioning signal identification. The RTOA measurement value refers to the relative duration of the starting time point of the received positioning signal relative to the preset reference time point, which corresponds to the SL UL-TDOA positioning capability.

In embodiments of the present disclosure, the second designated information element for providing measurement results corresponding to the SL carrier phase positioning capability includes at least one of the SL carrier phase positioning signal measurement information or the SL carrier phase positioning signal measurement error information.

The SL carrier phase positioning signal measurement information includes reference positioning signal identification information.

The sidelink reference positioning signal identification information includes but is not limited to at least one of the reference positioning signal resource set identification, reference positioning signal resource identification, or reference positioning signal identification.

SL carrier phase positioning signal measurement error information is used to indicate at least one of the following: server error; Undefined error; Absence of assistance information; unable to measure; missing assistance information for position calculation; missing, altered or ineffective positioning signal configuration; or unable to send positioning signal.

The second designated information element for providing measurement results corresponding to SL carrier phase positioning capability may also include measurement results corresponding to SL carrier phase positioning capability, which may include but are not limited to at least one of the following: sidelink positioning signal identification information; sidelink synchronization signal identification information; Layer 2 identification information of the second terminal; ARFCN value; timestamp; carrier phase measurement value; RSRP result of positioning signal; timing quality of sidelink; or a path list used to indicate at least one of the measurement values or timing quality for other additional paths.

The sidelink positioning signal identification information includes but is not limited to at least one of the positioning signal resource set identification, positioning signal resource identification, or positioning signal identification.

Next, the positioning method provided in this disclosure will be illustrated from the perspective of the second terminal. The second terminal may be a different terminal from the first terminal in Sidelink that supports the LPP protocol and serves as the positioning server or target device.

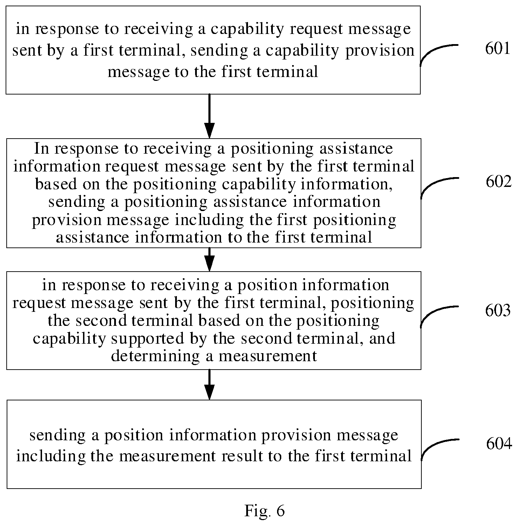

Embodiments of the present disclosure provide a positioning method, as shown in Fig. 6, which is a flowchart of a positioning method according to an embodiment, the method can be performed by a second terminal. The method may include the following steps.

In step 601, in response to receiving a capability request message sent by a first terminal, a capability provision message is sent to the first terminal.

The first terminal is a terminal that communicates with the second terminal through a sidelink, and the capability request message is used to request the second terminal to provide the positioning capability supported by the second terminal. The capability request message includes positioning capability information indicating the positioning capability supported by the second terminal.

In step 602, in response to receiving a positioning assistance information request message sent by the first terminal based on the positioning capability information, a positioning assistance information provision message including first positioning assistance information is sent to the first terminal.

The positioning assistance information request message is used to request the second terminal to provide the first positioning assistance information, which is used to assist the first terminal in determining the measurement result for positioning the second terminal.

In step 603, in response to receiving a position information request message from the first terminal, the second terminal is positioned based on the positioning capability supported by the second terminal, and the measurement result is determined.

The position information request message is used to request the second terminal to determine the measurement result.

In step 604, a position information provision message including the measurement result is sent to the first terminal.

In the above embodiment, terminal positioning can be carried out between terminals based on the LPP protocol, which has been enhanced to achieve the purpose of positioning terminals based on the LPP protocol on the sidelink.

In some embodiments, the second terminal may also receive a positioning assistance information provision message actively sent by the first terminal, including second positioning assistance information, after sending the capability provision message to the first terminal. The second positioning assistance information is used to assist the second terminal in determining the position information of the second terminal. The specific implementation is similar to the implementation shown in Fig. 3, and will not be elaborated here.

In some embodiments, the positioning capability requested by the capability request message received by the second terminal is the same as that requested by the capability request message introduced on the first terminal side, and will not be repeated here.

After receiving the capability request message, the second terminal can send the capability provision message to the first terminal. In the case where the capability request message is used to request the second terminal to provide the seventh positioning capability, the positioning capability information corresponding to the seventh positioning capability in the capability provision message is used to indicate whether the second terminal supports the transmission of the first positioning assistance information determined by the target positioning method through the sidelink.

In the case where the capability request message is used to request the second terminal to provide any positioning capability other than the seventh positioning capability, the positioning capability information corresponding to different positioning capabilities in the capability provision message includes at least one of the following: positioning signal capability information corresponding to different positioning capabilities; or positioning measurement capability information corresponding to different positioning capabilities. The specific information content of positioning signal capability information and positioning measurement capability information is the same as the information content of positioning signal capability information and positioning measurement capability information introduced on the first terminal side, and will not be repeated here.

Furthermore, upon receiving the capability provision message sent by the second terminal, the first terminal will send the positioning assistance information request message to the second terminal based on the positioning capability information included in the capability provision message for indicating the positioning capability supported by the second terminal. In the case where the capability request message is used to request the second terminal to provide any positioning capability other than the seventh positioning capability, the positioning assistance information request message is at least used to request the second terminal to provide the information type of the first positioning assistance information. The information type of the first positioning assistance information includes any of the following: positioning signal assistance information, position calculation assistance information, sidelink synchronization signal block configuration information, and error type assistance information.

After receiving the above positioning assistance information request message, the second terminal can send the positioning assistance information provision message to the first terminal, and provide the first positioning assistance information to the first terminal through the positioning assistance information provision message. The second terminal can provide the first positioning assistance information in any of the following ways.

In the first way, the second terminal sends the first positioning assistance information to instruct the second terminal to provide positioning signals based on each sidelink frequency range.

The specific information content of the first positioning assistance information has been introduced on the first terminal side, and will not be repeated here.

In the second way, the second terminal sends the first positioning assistance information to instruct the second terminal to provide positioning signals based on each BWP in each sidelink frequency range.

The specific information content of the first positioning assistance information has been introduced on the first terminal side, and will not be repeated here.

Furthermore, after receiving the positioning assistance information provision message sent by the second terminal, the first terminal sends a position request message to the second terminal. The position information request message includes at least one of the following: a first common information element corresponding to any positioning capability; or a first designated information element used to request measurement results corresponding to different positioning capabilities.

The information content of the first common information element and the first designated information element has been introduced on the first terminal side, and will not be repeated here.

After receiving the position information request message, the second terminal determines the measurement result for the first terminal based on its own positioning capability, and sends the position information provision message including the measurement result to the first terminal. The position information provision message includes at least one of the following: a second common information element corresponding to any positioning capability; or a second designated information element used to provide measurement results corresponding to different positioning capabilities. The specific information content has also been introduced on the first terminal side, and will not be repeated here.

In the above embodiments, terminal positioning can be carried out between terminals based on the LPP protocol, which has been enhanced to achieve the purpose of positioning terminals based on the LPP protocol on the sidelink.

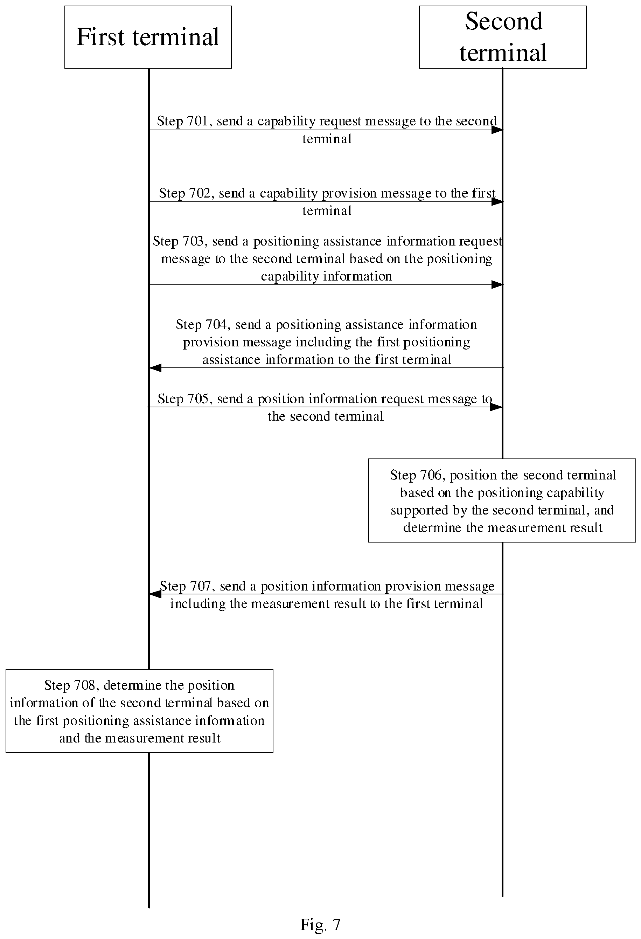

In some embodiments, referring to Fig. 7, which is a flowchart of a positioning method according to an embodiment, the method may include the following steps.

In step 701, the first terminal sends the capability request message to the second terminal.

The first terminal communicates with the second terminal through a sidelink. The capability request message is used to request the second terminal to provide the positioning capability supported by the second terminal.

In step 702, the second terminal sends the capability provision message to the first terminal.

The capability provision message includes the positioning capability information for indicating the positioning capability supported by the second terminal.

In step 703, the first terminal sends the positioning assistance information request message to the second terminal based on the positioning capability information.

The positioning assistance information request message is used to request the second terminal to provide the first positioning assistance information to assist the first terminal in determining the position information of the second terminal.

In step 704, the second terminal sends the positioning assistance information provision message including the first positioning assistance information to the first terminal.

In step 705, the first terminal sends the position information request message to the second terminal.

The position information request message is used to request the second terminal to determine the measurement result for measuring the position information of the second terminal.

In step 706, the second terminal positions the second terminal based on the positioning capability supported by the second terminal, and determines the measurement result.

In step 707, the second terminal sends the position information provision message including the measurement result to the first terminal.

In step 708, the first terminal determines the position information of the second terminal based on the first positioning assistance information and the measurement result.

The position information determined by the first terminal may be the absolute position information of the second terminal or the relative position information of the second terminal relative to the reference point.

In the above embodiments, terminal positioning can be carried out between terminals based on the LPP protocol, which has been enhanced to achieve the purpose of positioning terminals based on the LPP protocol on the sidelink.

It should be noted that there are two terminals in the sidelink, one of which can serve as the device end of the LPP protocol, such as the first terminal in the above embodiments, and the other can serve as the positioning server end of the LPP protocol, such as the second terminal in the above embodiments. Alternatively, both terminals can communicate as device ends to achieve the purpose of positioning terminals on the sidelink based on the LPP protocol.

A terminal can also serve as the device end and the positioning server end respectively, so that it can communicate with one or more other terminals simultaneously as the device end and server end, and achieve the purpose of positioning the terminal based on the LPP protocol on the sidelink.

Corresponding to the aforementioned embodiments of implementing methods by applying functions, this disclosure also provides embodiments of implementing apparatuses by applying functions.

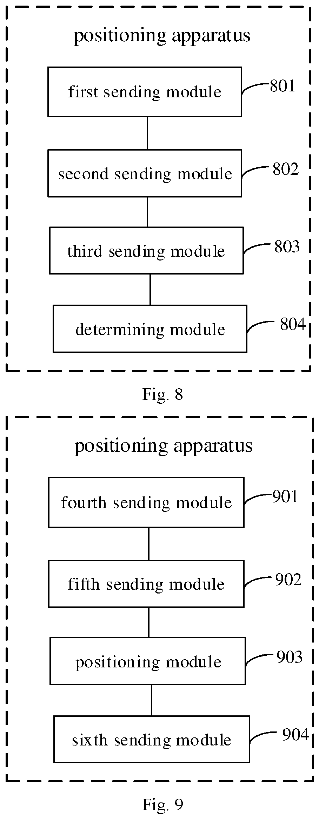

Referring to Fig. 8, which is a block diagram of a positioning apparatus illustrated according to an embodiment, the apparatus is applied in a first terminal, and includes a first sending module 801, a second sending module 802, a third sending module 803 and a determining module 804.

The first sending module 801 is configured to send a capability request message to a second terminal. The second terminal is a terminal that communicates with the first terminal through a sidelink, and the capability request message is used to request the second terminal to provide the positioning capability supported by the second terminal.

The second sending module 802 is configured to, in response to receiving a capability provision message returned by the second terminal, send a positioning assistance information request message to the second terminal based on positioning capability information for indicating the positioning capability supported by the second terminal in the capability provision message. The positioning assistance information request message is used to request the second terminal to provide the first positioning assistance information, and the first positioning assistance information is used to assist the first terminal in determining the position information of the second terminal.

The third sending module 803 is configured to send a position information request message to the second terminal in response to receiving a positioning assistance information provision message including the first positioning assistance information returned by the second terminal. The position information request message is used to request the second terminal to provide measurement results for measuring the position information of the second terminal.

The determining module 804 is configured to, in response to receiving a position information provision message including the measurement result returned by the second terminal, determine the position information of the second terminal based on the first positioning assistance information and the measurement result.

Referring to Fig. 9, which is a block diagram of a positioning apparatus illustrated according to an exemplary embodiment, the apparatus is applied to a second terminal, and includes a fourth sending module 901, a fifth sending module 902, a positioning module 903 and a sixth sending module 904.

The fourth sending module 901 is configured to, in response to receiving a capability request message sent by a first terminal, send a capability provision message to the first terminal. The first terminal is a terminal that communicates with the second terminal through a sidelink, the capability request message is used to request the second terminal to provide the positioning capability supported by the second terminal, and the capability provision message includes positioning capability information for indicating the positioning capability supported by the second terminal.

The fifth sending module 902 is configured to, in response to receiving a positioning assistance information request message sent by the first terminal based on the positioning capability information, send a positioning assistance information provision message including first positioning assistance information to the first terminal. The positioning assistance information request message is configured to request the second terminal to provide the first positioning assistance information, and the first positioning assistance information is configured to assist the first terminal in determining a measurement result for positioning the second terminal.

The positioning module 903 is configured to, in response to receiving a position information request message sent by the first terminal, position the second terminal based on the positioning capability supported by the second terminal, and determine the measurement result. The position information request message is configured to request the second terminal to determine the measurement result.

The sixth sending module 904 is configured to send a position information provision message including the measurement result to the first terminal.

For the apparatus embodiment, since it basically corresponds to the method embodiment, please refer to the partial explanation of the method embodiment for relevant information. The apparatus embodiments described above are only illustrative, where the units described as separate components may or may not be physically separated, and the components displayed as units may or may not be physical units, that is, they can be located in one place or distributed across multiple network units. Some or all modules can be selected according to actual needs to achieve the purpose of this disclosed solution. Ordinary technical personnel in this field can understand and implement it without creative labor.

Correspondingly, the present disclosure also provides a computer-readable storage medium, wherein the storage medium stores a computer program for executing the positioning method for either the first terminal or the second terminal side as described above.

Correspondingly, the present disclosure also provides a positioning device, including:
a processor; and
a memory storing instructions executable by the processor,
wherein the processor is configured to perform any of the positioning methods on the first or second terminal side as described above.

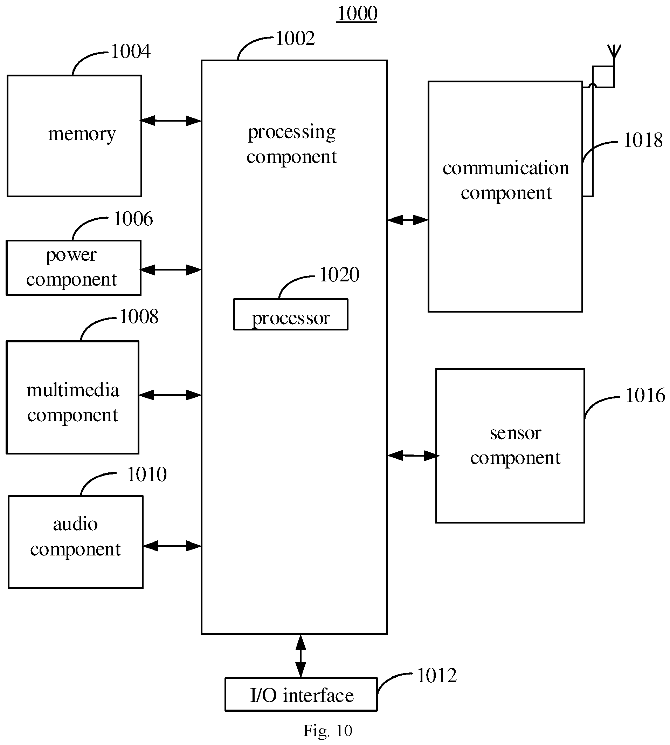

Fig. 10 is a block diagram of a positioning device 1000 illustrated according to an exemplary embodiment. For example, the positioning device 1000 may be a mobile phone, tablet, e-book reader, multimedia playback device, wearable device, in-vehicle user device, iPad, smart TV, and other terminals.

Referring to Fig. 10, the positioning device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the positioning device 1000, such as the operations associated with display, telephone calls, data communications, camera operations, and recording operations. The processing component 1002 may include one or more processors 1020 to execute instructions. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the positioning device 1000. Examples of such data include instructions for any applications or methods operated on the positioning device 1000, contact data, phonebook data, messages, pictures, video, etc. The memory 1004 may be implemented using any type of volatile or nonvolatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the positioning device 1000. The power component 1006 may include a power management system, one or more power sources, and any other components associated with the generation, management, and distribution of power in the positioning device 1000.

The multimedia component 1008 includes a screen providing an output interface between the positioning device 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. When the positioning device 1000 is in an operation mode, such as a shooting mode or a video mode, the front camera and/or the rear camera can receive external multimedia data. Each front camera and rear camera can be a fixed optical lens system or have focal length and optical zoom capabilities.

The audio component 1010 is configured to output and/or input audio signals. For example, the audio component 1010 includes a microphone ("MIC") configured to receive an external audio signal when the positioning device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker for outputting audio signals.

The I/O interface 1012 provides an interface between the processing component 1002 and peripheral interface modules, such as a keyboard, a click wheel, buttons, and the like. The buttons may include but are not limited to: home button, volume button, start button, and lock button.

The sensor component 1014 includes one or more sensors to provide status assessments of various aspects of the positioning device 1000. For instance, the sensor component 1014 may detect an open/closed status of the positioning device 1000, relative positioning of components, e.g., the display and the keypad, of the positioning device 1000, a change in position of the positioning device 1000 or a component of the positioning device 1000, a presence or absence of a target object contact with the positioning device 1000, an orientation or an acceleration/deceleration of the positioning device 1000, and a change in temperature of the positioning device 1000. The sensor assembly 1014 may include a proximity sensor configured to detect the presence of nearby objects without any physical contact. The sensor component 1014 may also include a light sensor, such as a CMOS or CCD image sensor, applicable for imaging applications. In some embodiments, the sensor component 1014 may also include an acceleration sensor, a gyroscope sensor, a magnetic sensor, a pressure sensor or a temperature sensor.

The communication component 1018 is configured to facilitate communication, wired or wirelessly, between the positioning device 1000 and other devices. The positioning device 1000 can access a wireless network based on a communication standard, such as WiFi, 4G, or 5G, or a combination thereof. In an exemplary embodiment, the communication component 1018 receives a broadcast signal or broadcast associated information from an external broadcast management system via a broadcast channel. In an exemplary embodiment, the communication component 1018 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the positioning device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, to execute the method according to any of the above embodiments.

In exemplary embodiments, there is also provided a non-transitory computer readable storage medium such as a memory 1004 storing instructions, which may be executed by a processor 1020 of the positioning device 1000 to implement the method mentioned above. For example, the non-transitory readable storage medium may be a ROM, a RAM, a CD-ROM, a magnetic tape, a floppy disc, an optical data storage device, and the like.

After considering the specification and practicing the disclosure disclosed herein, those skilled in the art will easily think of other embodiments of the present disclosure. This disclosure is intended to cover any variations, purposes, or adaptive changes of the present disclosure. These variations, purposes, or adaptive changes follow general principles of the present disclosure and include common knowledge or conventional technical means in the technical field not disclosed in the present disclosure. The description and the embodiments are only regarded as exemplary, and the true scope and spirit of the present disclosure are pointed out by the following claims.

It should be understood that the present disclosure is not limited to the precise structure that has been described above and illustrated in the drawings, and various modifications and changes can be made without departing from its scope. The scope of the present disclosure is only limited by the appended claims.

## Claims

1. A positioning method, performed by a first terminal, comprising:
sending a capability request message to a second terminal, wherein the second terminal is a terminal that communicates with the first terminal through a sidelink, and the capability request message is configured to request the second terminal to provide a positioning capability supported by the second terminal;
in response to receiving a capability provision message returned by the second terminal, sending a positioning assistance information request message to the second terminal based on capability information for indicating the positioning capability supported by the second terminal in the capability provision message, wherein the positioning assistance information request message is configured to request the second terminal to provide first positioning assistance information, and the first positioning assistance information is configured to assist the first terminal in determining position information of the second terminal;
in response to receiving a positioning assistance information provision message returned by the second terminal and comprising the first positioning assistance information, sending a position information request message to the second terminal, wherein the position information request message is configured to request the second terminal to provide a measurement result for measuring the positioning information of the second terminal;
in response to receiving a position information provision message returned by the second terminal and comprising the measurement result, determining the position information of the second terminal based on the first positioning assistance information and the measurement result.

2. The method of claim 1, further comprising:
sending a positioning assistance information provision message comprising second positioning assistance information to the second terminal, wherein the second positioning assistance information is configured to assist the second terminal in determining the position information of the second terminal.

3. The method of claim 1, wherein sending the capability request message to the second terminal comprises:
sending the capability request message comprising a first information element to the second terminal, wherein the first information element is an information element for requesting the second terminal to provide at least one positioning capability supported by the second terminal.

4. The method of claim 1, wherein sending the capability request message to the second terminal comprises:
adding a capability request indication field corresponding to a sidelink in a second information element of the capability request message, wherein the second information element is an information element in the capability request message for requesting a device receiving the capability request message to provide supported positioning capability; and
sending the capability request message comprising the indication field to the second terminal.

5. The method of claim 1, wherein the capability request message is configured to request the second terminal to provide the positioning capability comprising at least one of:
a first positioning capability of whether the second terminal supports positioning the second terminal based on at least one round trip time (RTT) between at least one first terminal and the second terminal;
a second positioning capability of whether the second terminal supports positioning the second terminal based on at least one angle of arrival, wherein the angle of arrival is an angle at which a positioning signal sent by the second terminal reaches the first terminal;
a third positioning capability of whether the second terminal supports positioning the second terminal based on at least one transmission angle, wherein the transmission angle is an angle at which the first terminal sends a positioning signal beam to the second terminal;
a fourth positioning capability of whether the second terminal supports positioning the second terminal based on a carrier phase of a positioning signal sent by the first terminal;
a fifth positioning capability of whether the second terminal supports positioning the second terminal based on differences of time at which positioning signals sent by a plurality of first terminal reach the second terminal;
a sixth positioning capability of whether the second terminal supports positioning the second terminal based on differences of time at which a positioning signal sent by the second terminal reaches a plurality of first terminals; or
a seventh positioning capability of whether the second terminal supports positioning the second terminal based on a target positioning method in a sidelink, wherein the target positioning method comprises at least one of an auxiliary global navigation satellite system positioning method, a Bluetooth positioning method, a ground beacon system positioning method, a wireless fidelity positioning method, or a sensor positioning method.

6. The method of claim 5, wherein in case that the capability request message is configured to request the second terminal to provide the seventh positioning capability, positioning capability information corresponding to the seventh positioning capability in the capability provision message is configured to indicate whether the second terminal supports transmission of the first positioning assistance information determined by the target positioning method through a sidelink.

7. The method of claim 5, wherein in case that the capability request message is configured to request the second terminal to provide any positioning capability other than the seventh positioning capability, positioning capability information corresponding to different positioning capabilities in the capability provision message comprises at least one of:
positioning signal capability information corresponding to different positioning capabilities; or
positioning measurement capability information corresponding to different positioning capabilities.

8. The method of claim 7, wherein the positioning signal capability information corresponding to the first positioning capability comprises:
first RTT capability information corresponding to sending a positioning reference signal by the second terminal; and
second RTT capability information corresponding to receiving a positioning reference signal by the second terminal.

9. The method of claim 8, wherein the first RTT capability information comprises at least one of:
first capability information of the second terminal in each sidelink frequency band; or
second capability information of the second terminal in each sidelink carrier aggregation combination.

10. The method of claim 8, wherein the first capability information comprises:
a list of bandwidth supported by the second terminal in each sidelink frequency band;
the second capability information comprises:
a maximum number of configurable positioning reference signal resources supported by the second terminal on each bandwidth part (BWP).

11. The method of claim 8, wherein the second RTT capability information comprises at least one of:
sidelink frequency band information supported by the second terminal; or
sidelink frequency band combination information supported by the second terminal.

12. The method of claim 7, wherein the positioning signal capability information corresponding to the second positioning capability, the third positioning capability, the fourth positioning capability or the sixth positioning capability comprises at least one of:
sidelink frequency band information supported by the second terminal; or
sidelink frequency band combination information supported by the second terminal.

13. The method of claim 11 or 12, wherein the sidelink frequency band information supported by the second terminal comprises at least one of:
a maximum number of reference signal resources supported by the second terminal on each resource set in each sidelink frequency band; or
a list of bandwidth supported by the second terminal in each sidelink frequency band.

14. The method of claim 7, wherein the positioning signal capability information corresponding to the fifth positioning capability comprises:
third capability information of sidelink frequency bands supported by the second terminal; or
fourth capability information of sidelink carrier aggregation combinations supported by the second terminal.

15. The method of claim 14, wherein the third capability information comprises:
a list of bandwidth supported by the second terminal on each sidelink frequency band;
the fourth capability information comprises:
a maximum number of configurable positioning reference signal resources supported by the second terminal on each BWP.

16. The method of claim 7, wherein the positioning measurement capability information corresponding to the first positioning capability comprises:
a maximum number of reception and transmission time difference measurement quantities supported by the second terminal in each sidelink frequency range; and
whether the second terminal supports measuring a reference signal receiving power (RSRP) in each sidelink frequency band.

17. The method of claim 7, wherein the positioning measurement capability information corresponding to the second positioning capability comprises:
a maximum number of arrival angle measurement quantities supported by the second terminal in each sidelink frequency range; and
a first frequency band list indicating arrival angle measurement capability, wherein the first frequency band list indicates for each sidelink frequency band, whether the second terminal supports measuring both an arrival angle and at least one first measurement quantity, the first measurement quantity being different from the arrival angle.

18. The method of claim 7, wherein the capability provision message further comprises first antenna capability information corresponding to the second positioning capability, wherein the first antenna capability information is configured to indicate a number of receiving antennas of the second terminal.

19. The method of claim 7, wherein the positioning measurement capability information corresponding to the third positioning capability comprises:
a maximum number of positioning signal RSRP measurement quantities supported by the second terminal in each sidelink frequency range; and
a second frequency band list indicating transmitting angle measurement capability, wherein the second frequency band list indicates for each sidelink frequency band, whether the second terminal supports measuring both a transmitting angle and at least one second measurement quantity, the second measurement quantity being different from the transmitting angle.

20. The method of claim 7, wherein the capability provision message further comprises second antenna capability information corresponding to the third positioning capability, wherein the second antenna capability information is configured to indicate a number of transmitting antennas of the second terminal.

21. The method of claim 7, wherein the positioning measurement capability information corresponding to the fourth positioning capability comprises:
a maximum number of reference signal time difference (RTSD) measurement quantities supported by the second terminal in each sidelink frequency range; and
whether the second terminal supports measuring RSRP in each sidelink frequency range.

22. The method of claim 7, wherein the positioning measurement capability information corresponding to the fifth positioning capability comprises:
a maximum number of relative duration measurement quantities supported by the second terminal in each sidelink frequency range, wherein the relative duration refers to a time difference between a start time point of receiving a positioning signal by the second terminal and a preconfigured reference time point; and
whether the second terminal supports measuring a RSRP in each sidelink frequency range.

23. The method of claim 7, wherein the positioning measurement capability information corresponding to the sixth positioning capability comprises:
a maximum number of carrier phase measurement quantities supported by the second terminal in each sidelink frequency range; and
a third frequency band list indicating carrier phase measurement capability, wherein the third frequency band list indicates for each sidelink frequency band, whether the second terminal supports measuring both a carrier phase and at least one third measurement quantity, the third measurement quantity being different from the carrier phase.

24. The method of claim 5, wherein in case that the capability provision message is configured to request the second terminal to provide any positioning capability other than the seventh positioning capability, the positioning assistance information request message is at least configured to request the second terminal to provide an information type of the first positioning assistance information;
the information type of the first positioning assistance information comprises any of:
positioning signal assistance information, position calculation assistance information, sidelink synchronization signal block configuration information, and error type assistance information.

25. The method of claim 24, wherein the positioning signal assistance information in the positioning assistance information provision message comprises any of:
first positioning signal assistance information configured to indicate that the second terminal provides a positioning signal based on each sidelink frequency range; and
second positioning signal assistance information configured to indicate that the second terminal provides a positioning signal based on each BWP in each sidelink frequency range.

26. The method of claim 25, wherein the first positioning signal assistance information comprises at least one of:
a positioning signal identifier;
an absolute radio frequency channel number (ARFCN) value corresponding to a reference point of a positioning signal;
starting physical resource block (PRB) location information of a positioning signal relative to a reference point;
subcarrier spacing information of a positioning signal;
bandwidth information of a positioning signal;
comb factor information of a positioning signal; or
cyclic prefix information of a positioning signal.

27. The method of claim 25, wherein the second positioning signal assistance information comprises at least one of:
sidelink BWP configuration information; or
sidelink BWP resource pool configuration information.

28. The method of claim 27, wherein the sidelink BWP configuration information comprises at least one of:
at least one of location, bandwidth, carrier spacing and cyclic prefix of sidelink BWP;
length symbol information of sidelink BWP;
starting symbol information of sidelink BWP;
sidelink physical broadcast channel (PBSCH) configuration information of sidelink BWP; or
direct component parameter information of sidelink BWP.

29. The method of claim 27, wherein the sidelink BWP resource pool configuration information reuses a sidelink resource pool information element, or
the sidelink resource pool configuration information is configured to configure a designated resource pool for positioning reference signals; wherein the sidelink resource pool configuration information is configured to configure at least one of the designated resource pool for positioning reference signals: starting resource block position information; number of resource blocks; comb factor size; subchannel size and subchannel data; sidelink time-domain resource information; measure power control information; regional configuration information; sidelink preemption enabling information; or optional configuration information for sidelink terminals.

30. The method of claim 24, wherein the position calculation assistance information comprises at least one of:
position coordinates of the second terminal;
reference time information of the second terminal, wherein the reference time information comprises at least one of reference signal identification, ARFCN value, system frame number, or world time;
antenna information of the second terminal, wherein the antenna information comprises at least one of a number of antennas or associated information corresponding to an antenna shape.

31. The method of claim 24, wherein the sidelink synchronization signal block configuration information is configured to configure at least one of:
sidelink synchronization signal identification; ARFCN value; sidelink synchronization signal block power; subcarrier spacing of sidelink synchronization signal block; half frame index; an offset of the first synchronization signal within a sidelink synchronization signal block period relative to a starting position of the synchronization signal block period; or a time interval between adjacent synchronization signal blocks within the synchronization signal block period.

32. The method of claim 24, wherein the error type assistance information comprises at least one of:
assistance information not supported; assistance information supported but not available; no positioning signal configured or positioning signal unavailable; or other undefined error information.

33. The method of claim 5, wherein the position information request message comprises at least one of:
a first common information element corresponding to any positioning capability; or
a first designated information element for requesting measurement results of measuring the position information of the second terminal based on different positioning capabilities.

34. The method of claim 33, wherein the first common information element comprises at least one of:
position information type;
reporting trigger conditions for triggering reporting of the measurement results;
periodic reporting conditions for reporting the measuring results periodically;
environmental information for indicating sidelink environment between the second terminal and the first terminal; or
service quality information.

35. The method of claim 34, wherein the reporting trigger conditions comprise at least one of:
a change in a round trip time on the sidelink exceeding a corresponding first threshold;
a change in a relative position between the first terminal and the second terminal on the sidelink exceeding a corresponding second threshold;
an angle change on the sidelink exceeding a corresponding third threshold;
a speed change of the second terminal on the sidelink exceeding a corresponding fourth threshold; or
an RSRP change of the positioning signal on the sidelink exceeding a corresponding fifth threshold,
wherein the service quality information comprises at least one of:
distance accuracy information indicating an accuracy of a distance between the first terminal and the second terminal;
horizontal angle accuracy information indicating an accuracy of a horizontal angle between the first terminal and the second terminal;
indication information indicating whether a vertical angle is required; or
vertical angle accuracy information indicating an accuracy of a vertical angle between the second terminal and the first terminal.

36. The method of claim 33, wherein the first designated information element for requesting measurement results corresponding to the first positioning capability or the fifth positioning capability is configured to request at least one of:
a sidelink reception and transmission time difference measurement quantity;
positioning signal RSRP;
assistance information availability for indicating whether additional positioning signal assistance information can be requested;
a maximum number of sidelink reception and transmission time difference measurement quantities; or
a time granularity factor for reporting the reception and transmission time difference.

37. The method of claim 33, wherein the first designated information element for request measurement results corresponding to the second positioning capability or the fourth positioning capability is configured to request an assistance information availability, wherein the assistance information availability is configured to indicate whether additional positioning signal assistance information can be requested.

38. The method of claim 33, wherein the first designated information element for requesting measurement results corresponding to the third positioning capability is configured to request at least one of:
assistance information availability for indicating whether additional positioning signal assistance information can be requested; or
a maximum number of positioning signal RSRP measurement quantities.

39. The method of claim 33, wherein the first designated information element for requesting measurement results corresponding to the sixth positioning capability is configured to request at least one of:
sidelink carrier phase measurement quantity;
positioning signal RSRP;
assistance information availability for indicating whether additional positioning signal assistance information can be requested;
a maximum number of sidelink carrier phase measurement quantities; or
a time granularity factor for reporting the sidelink carrier phase measurement quantity.

40. The method of claim 5, wherein the position information provision message comprises at least one of:
a second common information element corresponding to any positioning capability; or
a second designated information element for providing measurement results of measuring the position information of the second terminal based on different positioning capabilities.

41. The method of claim 40, wherein the second common information element comprises at least one of:
position coordinate information obtained from position estimation of the second terminal;
speed information obtained from speed estimation of the second terminal;
position error information for indicating causes of positioning failure; or
position source information for indicating the positioning capability used in determining the measurement results.

42. The method of claim 40, wherein the second designated information element for providing measurement results corresponding to any one of the first positioning capability, the third positioning capability, the fourth positioning capability, the fifth positioning capability, or the sixth positioning capability comprises at least one of:
positioning measurement information or positioning measurement error information.

43. The method of claim 42, wherein the positioning measurement information comprises at least one of:
sidelink positioning signal identification information or sidelink reference positioning signal identification information;
sidelink synchronization signal identification information;
Layer 2 identification information of the second terminal;
ARFCN value;
timestamp;
positioning signal RSRP result;
other additional measurement quantities;
sidelink timing quality; or
a path list for indicating at least one of measurement values or timing quality for other additional paths.

44. The method of claim 42, wherein the positioning measurement error information is configured to indicate at least one of:
server error; undefined error; absence of assistance information; unable to measure; missing assistance information for position calculation; missing, altered or ineffective positioning signal configuration; or unable to send positioning signal.

45. The method of claim 42, wherein the second designated information element further comprises measurement results corresponding to different positioning capabilities;
wherein the measurement results comprise at least one of sidelink positioning signal identification information and layer 2 identification information of the second terminal.

46. A positioning method, performed by a second terminal, and comprising:
in response to receiving a capability request message sent by a first terminal, sending a capability provision message to the first terminal, wherein the first terminal is a terminal that communicates with the second terminal through a sidelink, the capability request message is configured to request the second terminal to provide a positioning capability supported by the second terminal, and the capability provision message comprises positioning capability information for indicating the positioning capability supported by the second terminal;
in response to receiving a positioning assistance information request message sent by the first terminal based on the positioning capability information, sending a positioning assistance information provision message comprising first positioning assistance information to the first terminal, wherein the positioning assistance information request message is configured to request the second terminal to provide the first positioning assistance information, and the first positioning assistance information is configured to assist the first terminal in determining a measurement result for positioning the second terminal;
in response to receiving a position information request message sent by the first terminal, positioning the second terminal based on the positioning capability supported by the second terminal, and determining the measurement result, wherein the position information request message is configured to request the second terminal to determine the measurement result; and
sending a position information provision message comprising the measurement result to the first terminal.

47. The method of claim 46, further comprising:
receiving the positioning assistance information provision message comprising second positioning assistance information sent by the first terminal, wherein the second positioning assistance information is configured to assist the second terminal in determining position information of the second terminal.

48. A positioning apparatus, applied in a first terminal, comprising:
a first sending module, configured to send a capability request message to a second terminal, wherein the second terminal is a terminal that communicates with the first terminal through a sidelink, and the capability request message is configured to request the second terminal to provide a positioning capability supported by the second terminal;
a second sending module, configured to, in response to receiving a capability provision message returned by the second terminal, send a positioning assistance information request message to the second terminal based on capability information for indicating the positioning capability supported by the second terminal in the capability provision message, wherein the positioning assistance information request message is configured to request the second terminal to provide first positioning assistance information, and the first positioning assistance information is configured to assist the first terminal in determining position information of the second terminal;
a third sending module, configured to, in response to receiving a positioning assistance information provision message returned by the second terminal and comprising the first positioning assistance information, send a position information request message to the second terminal, wherein the position information request message is configured to request the second terminal to provide a measurement result for measuring the positioning information of the second terminal; and
a determining module, configured to, in response to receiving a position information provision message returned by the second terminal and comprising the measurement result, determine the position information of the second terminal based on the first positioning assistance information and the measurement result.

49. A positioning apparatus, applied in a second terminal, comprising:
a fourth sending module, configured to, in response to receiving a capability request message sent by a first terminal, send a capability provision message to the first terminal, wherein the first terminal is a terminal that communicates with the second terminal through a sidelink, the capability request message is configured to request the second terminal to provide a positioning capability supported by the second terminal, and the capability provision message comprises positioning capability information for indicating the positioning capability supported by the second terminal;
a fifth sending module, configured to, in response to receiving a positioning assistance information request message sent by the first terminal based on the positioning capability information, send a positioning assistance information provision message comprising first positioning assistance information to the first terminal, wherein the positioning assistance information request message is configured to request the second terminal to provide the first positioning assistance information, and the first positioning assistance information is configured to assist the first terminal in determining a measurement result for positioning the second terminal;
a positioning module, configured to, in response to receiving a position information request message sent by the first terminal, position the second terminal based on the positioning capability supported by the second terminal, and determine the measurement result, wherein the position information request message is configured to request the second terminal to determine the measurement result; and
a sixth sending module, configured to send a position information provision message comprising the measurement result to the first terminal.

50. A computer readable storage medium, storing a computer program for executing the positioning method of any one of claims 1-47.

51. A positioning device, comprising:
a processor; and
a memory, configured to store instructions executable by the processor,
wherein the processor is configured to execute the positioning method of any one of claims 1-47.
